(19) Europäisches Patentamt
European Patent Office
Office européen des brevets

(11) **EP 2 058 939 B1**

(12) **EUROPÄISCHE PATENTSCHRIFT**

(45) Veröffentlichungstag und Bekanntmachung des Hinweises auf die Patenterteilung:
**04.08.2010  Patentblatt 2010/31**

(51) Int Cl.:
*H02P 7/28* (2006.01)     *F03D 7/02* (2006.01)

(21) Anmeldenummer: **08164152.4**

(22) Anmeldetag: **11.09.2008**

(54) **Windkraftanlage mit Ansteuerschaltung für einen drehzahlbegrenzten und spannungsquellenschonenden Betrieb eines Pitchantrieb-Reihenschlussmotors bei generatorischen Momenten**

Wind energy plant with control circuit for operation under limited speed and voltage source protection concerning a series wound DC pitch drive with generator torque

Eolienne dotée d'un commutateur de commande destiné au fonctionnement à vitesse limité et à économie de sources de tension d'un moteur série à collecteur et tangage pour moments de générateur

(84) Benannte Vertragsstaaten:
**DE ES FR IT**

(30) Priorität: **08.11.2007  DE 102007053613**

(43) Veröffentlichungstag der Anmeldung:
**13.05.2009  Patentblatt 2009/20**

(73) Patentinhaber: **Moog Unna GmbH**
**59423 Unna (DE)**

(72) Erfinder: **Rösmann, Tobias**
**44137, Dortmund (DE)**

(74) Vertreter: **Tappe, Hartmut et al**
**advotec.**
**Patent- und Rechtsanwälte**
**Georg-Schlosser-Strasse 6**
**35390 Giessen (DE)**

(56) Entgegenhaltungen:
**DE-A1- 4 240 972     DE-B3-102004 005 169**
**US-A- 4 186 333**

**Beschreibung**

Die Erfindung betrifft eine Windkraftanlage mit Ansteuerschaltung für einen drehzahlbegrenzten und spannungsquellenschonenden Betrieb eines Pitchantrieb-Reihenschlussmotors bei generatorischen Momenten, die einen Reihenschlussmotor mit getrennt voneinander anschließbarer Anker- und Erregerwicklung, einen im Wesentlichen in Reihe mit der Erreger- und parallel zur Ankerwicklung geschalteten Lastwiderstand $R_{11}$, sowie eine Spannungsquelle, insbesondere Batterie oder Akkumulator, umfasst.

Generell sind in Reihenschlussmotoren, die auch Hauptschlussmotoren genannt werden, Erreger- und Ankerwicklung in Reihe geschaltet. Dadurch wechseln Erregerstrom und Ankerstrom und damit auch die von ihnen bewirkten Magnetfelder ihre Richtung synchron, so dass eine Speisung mit Wechselstrom bei fester Drehrichtung möglich ist. Die Erregerwicklung ist in der Regel und im Gegensatz zum Nebenschlussmotor niederohmig. Die Drehzahl von Reihenschlussmotoren ist stark lastabhängig. Sinkt das abgegebene Drehmoment, z.B. im Leerlauffall, so steigt wegen des geringen Stroms und der damit einhergehenden Feldschwächung die Drehzahl des Ankers. Das kann soweit führen, dass der Motor "durchgeht", was bedeutet, dass die Drehzahl immer weiter steigt und eine Zerstörung des Motors wegen der auftretenden Fliehkräfte zur Folge haben kann. Deshalb werden Reihenschlussmotoren nach dem Stand der Technik mit einer Grundlast, wie beispielsweise Motorlüfter, Getriebe oder parallel zum Anker geschaltetem Lastwiderstand, betrieben, um einer Feldschwächung des Erregermagnetfelds entgegenzuwirken. Aus dem Stand der Technik sind somit prinzipiell zwei Maßnahmen bekannt, um das Durchgehen eines Reihenschlussmotors zu verhindern: Zum einen eine künstliche Erhöhung der mechanischen Last, beispielsweise durch Getriebe oder mechanischen Lüfter, zum anderen durch elektrische Parallelschaltung eines Lastwiderstandes parallel zur Ankerwicklung, so dass die Erregerwicklung auch bei abnehmendem Ankerstrom mit Strom durchflossen wird, um das Erregermagnetfeld aufrecht zu erhalten. Dabei wird schaltungstechnisch eine Art Hybridmotor geschaffen, der Eigenschaften eines Reihen- und Nebenschlussmotors miteinander verbindet.

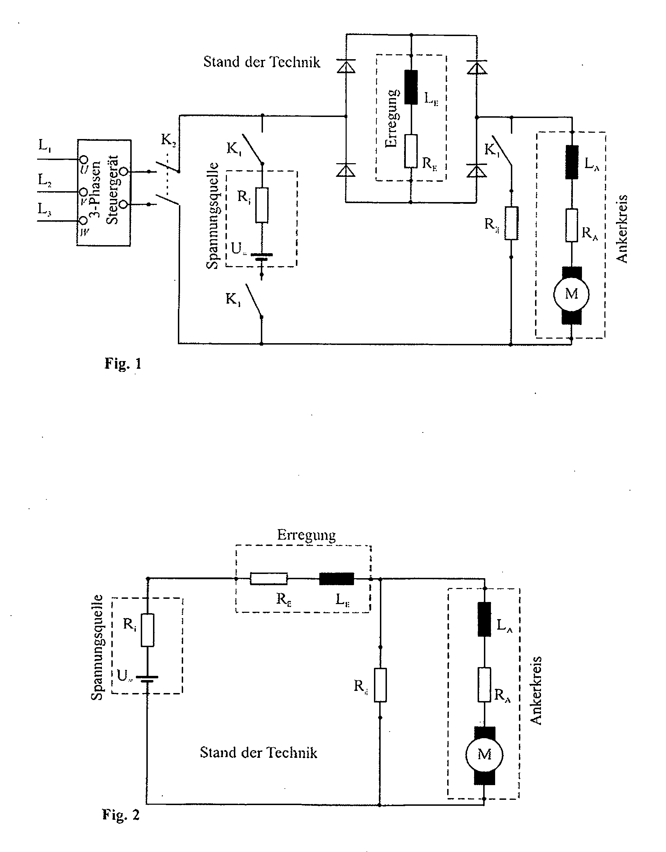

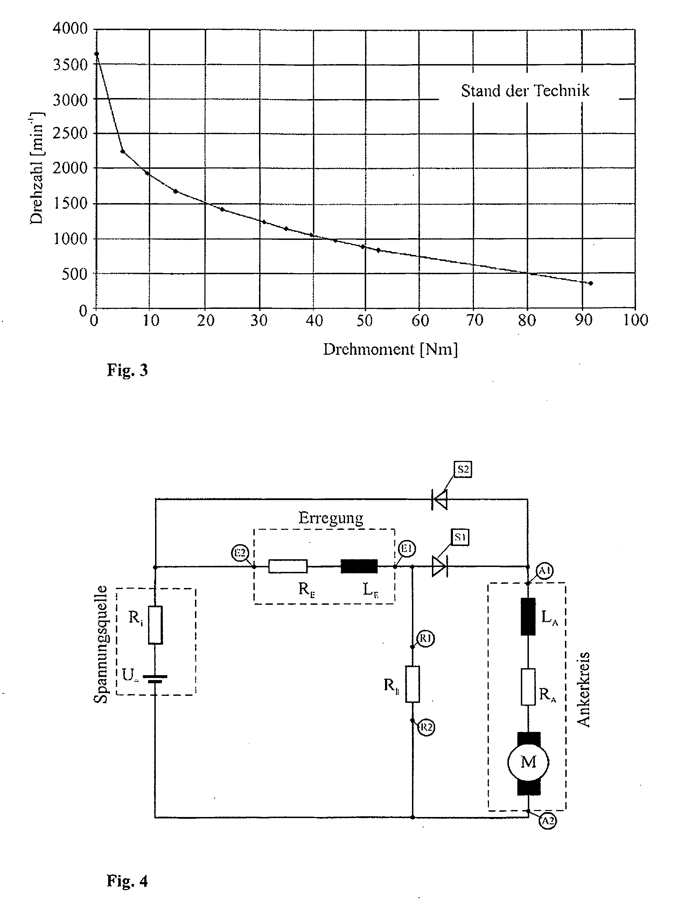

In **Fig. 1** ist eine typische Ansteuerschaltung eines Pitchantrieb-Reihenschlussmotors einer Windkraftanlage dargestellt, der sowohl mit dreiphasigem Netzstrom, als auch mit Gleichstrom durch einen Akkumulator gespeist werden kann. Um eine Drehrichtungsumkehr des Reihenschlussmotors zu erreichen ist die Erregerwicklung mit einem Brückengleichrichter als Feldgleichrichter verschaltet. Parallel zum Ankerkreis ist ein paralleler Lastwiderstand $R_{\parallel}$ geschaltet, so dass auch bei abnehmendem Strom durch die Ankerwicklung oder beispielsweise bei einem Defekt des Ankerkreises ein Mindeststrom durch die Erregerwicklung fließt und das Erregermagnetfeld aufrechterhält. Diesbezüglich zeigt **Fig. 2** die Grundkonfiguration einer aus dem Stand der Technik bekannten Ansteuerschaltung eines Pitchantrieb-Reihenschlussmotors. In **Fig. 3** ist das Drehzahlverhalten des Reihenschlussmotors nach der Grundkonfiguration der Ansteuerschaltung nach **Fig. 1** und **2** dargestellt. Nimmt das Drehmoment des Reihenschlussmotors ab, beispielsweise im Leerlauf oder durch ein äußeres Drehmoment, so dass der Motor vom Motorbetrieb zum Generatorbetrieb übergeht, so nimmt die Drehzahl asymptotisch Richtung geringer werdendem Drehmoment zu und wächst über alle Grenzen. Dies wird als "Durchgehen" des Motors bezeichnet und führt in der Regel zur Selbstzerstörung des Motors.

Die in **Fig. 1** gezeigte typische Ansteuerschaltung aus dem Stand der Technik umfasst eine Normalbetriebsspannungsquelle, beispielsweise ein Dreiphasensteuergerät, das aus dreiphasiger Netzspannung Gleichspannung gewinnt, und das bei geschlossenem Schalter K2 die Energieversorgung des Reihenschlussmotors übernimmt. Fällt beispielsweise das Netz aus, so versorgt eine Notbetriebsspannungsquelle durch Einschalten des Schalters K1 und Öffnen des Schalters K2 im Notbetrieb den Reihenschlussmotor. Ein durch vier Dioden realisierter Feldgleichrichter bewirkt, dass der Stromfluss durch die Erregerwicklung unabhängig von der Polarität der Versorgungsspannungsquelle immer in gleicher Richtung verläuft, so dass die Ausrichtung des Erregermagnetfelds $\Psi$ unabhängig vom Stromfluss durch den Motor ist. Jedoch ändert sich durch eine umgekehrte Polarität der Stromfluss I durch die Ankerwicklung, so dass sich das Drehmoment

$$M = \Psi \times I \; [Nm]$$

(mit $\Psi$ als magnetischem Fluss der Erregerwicklung und I als Ankerstrom) bei Umkehrung der Polarität der Spannungsquelle ebenfalls umkehrt. Somit ist ein Mehrquadrantenbetrieb des Reihenschlussmotors möglich. Ohne Feldgleichrichter käme es bei einer Umkehr der Versorgungsspannung sowohl zu einer Umkehr des Erregermagnetfeldes $\Psi$ als auch des Ankerstroms I, wodurch die Richtung des Moments konstant bliebe.

Der in **Fig. 1** eingezeichnete parallel zur Ankerwicklung geschaltete Lastwiderstand $R_{\parallel}$ sorgt dafür, dass selbst dann, wenn im Anker des Motors kein Strom fließt, durch den Widerstand ein Erregerstrom aufrechterhalten und damit ein Erregerfeld generiert wird, das nach der Gleichung:

$$U_{ind} = \Psi \times \omega \; [V]$$

(mit ($\omega$ als Drehfrequenz des Motors) zu einer induzierten Spannung $U_{ind}$ im Anker führt. Selbst wenn kein Fehlerfall vorliegt sorgt die induzierte Ankerspannung $U_{ind}$ im Leerlauffall des Reihenschlussmotors für eine stationär begrenzte Drehzahl.

Während eines Leerlauffalls hat die Maschine ein Reibungsmoment bedingt durch Lagerreibung oder angeschlossenem Getriebe bzw. Lüfter aufzubringen. Der Erregerstrom teilt sich somit während des Leerlaufs auf in einen durch den Lastwiderstand $R_{\parallel}$ hervorgerufenen Grundlaststrom, sowie einen drehzahlabhängigen Ankerstrom.

Jedoch weist die aus dem Stand der Technik bekannte Ansteuerschaltung eines Pitchantrieb-Reihenschlussmotors einen erheblichen Nachteil bei generatorischen Momenten, d.h. beim Antrieb des Motors von außen auf, wie beispielsweise beim Auftreten einer hohen Windlast auf das Rotorblatt. Tritt eine Erhöhung der Drehzahl z.B. durch Antrieb des Motors von außen auf, so sinkt der Ankerstrom. Prinzipbedingt sinkt hierdurch ebenfalls die Erregung der Maschine, was zu einer Reduzierung der induzierten Spannung führt. Eine weitere Erhöhung der Drehzahl führt dazu, dass der Motor in den generatorischen Zustand übergeht, d.h. dass sich der Ankerstrom umkehrt. Dies tritt dann ein, wenn die induzierte Spannung im Anker größer als das Potential am Parallelwiderstand $R_{\parallel}$ wird. In diesem Fall führt der induzierte Strom zu einer Abnahme des Stroms der Spannungsquelle. Erhöht sich der im Anker induzierte Strom weiter, so übernimmt der Ankergenerator die vollständige Versorgung des Parallelwiderstands $R_{\parallel}$ und der Batteriestrom würde zu Null, bzw. sogar negativ werden. Ein negativer Batteriestrom führt zu einer unerwünschten Belastung und/oder unkontrollierten Ladung der Spannungsquelle, die die Lebensdauer der Batterie bzw. des Akkumulators verringert.

Entspricht die Größe der im Anker induzierten Spannung gerade der Spannung der Spannungsquelle, so fließt kein Strom mehr durch die Erregerspule. Dadurch wird das magnetische Erregerfeld im Motor zu Null, so dass ebenfalls die induzierte Spannung zu Null wird und man erhält dadurch das bekannte Ergebnis des "Durchgehens" der Maschine. Somit führt eine generatorische Last auf einen Reihenschlussmotor nach der bekannten Anschaltung ebenfalls zu einem "Durchgehen" und eventuell zur Selbstzerstörung des Motors. In der Praxis führt dies dazu, dass ein generatorischer Betrieb eines Reihenschlussmotors trotz parallelem Lastwiderstand $R_{\parallel}$ nur in ganz begrenzten Ausnahmefällen möglich ist, da zumeist nach den oben genannten Gründen die mechanisch kritische Grenzdrehzahl erreicht wird, und der Motor dadurch Schaden nimmt.

Zur Erhöhung der elektrischen Stabilität des Stellmotors beim generatorischen Bremsen schlägt das Dokument DE102004005169 eine

Drehmomentschwächung durch eine parallel zur Ankerwicklung geschaltete Freilaufdiode vor, wobei als Freilaufdiode eine Diode des die Reihenschlusswicklung speisenden Gleichrichters dienen kann.

Ausgehend von diesem Stand der Technik ist es Aufgabe der vorliegenden Erfindung, eine Windkraftanlage mit Ansteuerschaltung für einen Pitchantrieb-Reihenschlussmotor zu schaffen, die das Ziel aufweist, einen drehzahlbegrenzten Betrieb auch im Fall eines generatorischen Antriebs des Pitchantrieb-Reihenschlussmotors zu ermöglichen. Daneben ist es Aufgabe der Erfindung die Spannungsquelle vor induzierter Motorspannung zu schützen. Dabei ist es eine weitere Aufgabe der Erfindung, die Lebensdauer von Akkumulatoren und/oder Batterien, die zum Notbetrieb des Reihenschlussmotors herangezogen werden, zu verlängern. Letztlich ist es Aufgabe der Erfindung, durch geringe Modifikation der aus dem Stand der Technik bekannten Ansteuerschaltung und ohne zusätzlichem Bauteilaufwand eine Ansteuerschaltung für Reihenschlussmotoren vorzuschlagen, die ähnliche Eigenschaften wie eine Doppelschlussmaschine kostengünstig und technisch verlässlich bereitstellt.

Diese Aufgabe wird durch eine Ansteuerschaltung nach der Lehre des Patentanspruchs 1 gelöst.

Vorteilhafte Ausgestaltungen der Erfindung sind Gegenstand der Unteransprüche.

Die erfindungsgemäße Windkraftanlage mit Ansteuerschaltung für einen drehzahlbegrenzten und spannungsquellenschonenden Betrieb eines Pitchantrieb-Reihenschlussmotors bei generatorischen Momenten umfasst einen Reihenschlussmotor, bei dem Ankerwicklung und Erregerwicklung getrennt voneinander anschließbar sind, einen Lastwiderstand $R_{\parallel}$, der im Wesentlichen in Reihe mit der Erregerwicklung und Parallel zur Ankerwicklung geschaltet ist, und eine Spannungsquelle, insbesondere Batterie oder Akkumulator. Hierzu ist der Lastwiderstand $R_{\parallel}$ mit einem ersten Anschlusskontakt mit einem ersten Anschlusskontakt der Erregerwicklung und mit einem zweiten Anschlusskontakt mit einem zweiten Anschlusskontakt der Ankerwicklung verbunden. Die Ansteuerschaltung ist dadurch gekennzeichnet, dass ein erster Anschlusskontakt der Ankerwicklung über ein erstes Stromrichterbauteil mit einem ersten Anschlusskontakt der Erregerwicklung verbunden ist, und der erste Anschlusskontakt der Ankerwicklung des Weiteren über ein zweites Stromrichterbauteil mit einem zweiten Anschlusskontakt der Erregerwicklung verbunden ist. Das erste Stromrichterbauteil ist dabei so verschaltet, dass es im motorischen Betrieb durchschaltet und im generatorischen Betrieb sperrt, und das zweite Stromrichterbauteil ist so verschaltet, dass es im generatorischen Betrieb durchschaltet und im motorischen Betrieb sperrt. Die Spannungsquelle ist zwischen dem zweiten Anschlusskontakt der Erregerwicklung und einem zweiten Anschlusskontakt der Ankerwicklung geschaltet.

Somit erfasst die Ansteuerschaltung erfindungsgemäß eine von der Erregerwicklung unabhängig ansteuerbare Ankerwicklung und zwei Stromrichterbauteile, die den Strom jeweils nur in eine Richtung durchlassen und in die andere Richtung sperren, sowie einen Lastwiderstand, der im motorischen Betrieb parallel zur Anker- und in Reihe mit der Erregerwicklung geschaltet ist. Im generatorischen Betrieb jedoch ist der Lastwiderstand lediglich in Reihe mit der Erregerwicklung geschaltet. Im Normalbetrieb fließt der Strom durch die Erregerwicklung über das erste Stromrichterbauteil in die in Reihe geschaltete Ankerwicklung und parallel hierzu durch den Lastwiderstand $R_{\parallel}$ zurück zur Spannungsquelle. Wird jedoch der Motor von außen durch eine Generatorlast angetrieben und somit Spannung in der Ankerwicklung induziert, so dass die Spannung der Ankerwicklung gegenüber der Spannung über dem Lastwiderstand $R_{\parallel}$ überwiegt, so sperrt das erste Stromrichterbauteil und der ankerinduzierte Strom fließt über das zweite Stromrichterbauteil durch die Erregerwicklung und den hierzu in Reihe geschalteten Lastwiderstand $R_{\parallel}$, so dass die Richtung des Stromflusses in der Erregerwicklung konstant bleibt.

Diese Schaltungskonfiguration führt dazu, dass selbst im generatorischen Betrieb ein Stromfluss in der Erregerwicklung und damit das Erregermagnetfeld in gleicher Richtung aufrechterhalten wird, so dass ein Durchgehen des Motors verhindert werden kann. Dabei ist es besonders vorteilhaft, dass lediglich zwei zusätzliche Stromrichterbauteilelemente in die bereits aus dem Stand der Technik bekannte Ansteuerschaltung eingefügt werden müssen, um einen generatorischen Betrieb des Reihenschlussmotors zu ermöglichen. Lediglich der Parallelwiderstand $R_{\parallel}$ wird durch ein Stromrichterbauteilelement (erstes Stromrichterbauteil) vom Anker der Maschine entkoppelt, und der Anker der Maschine ist über ein Rückkopplungsstromrichterbauteilelement (zweites Stromrichterbauteil) mit der Spannungsquellenseite der Erregerwicklung verbunden. Im motorischen Betrieb fließt der Strom von der Spannungsquelle über die Erregerwicklung und teilt sich dann in einen Widerstandsstrom durch den Lastwiderstand $R_{\parallel}$ und in einen Ankerstrom über das erste Stromrichterbauteil durch die Ankerwicklung auf. Im generatorischen Betrieb, wenn die induzierte Spannung im Anker überwiegt, sperrt das erste Stromrichterbauteil und der induzierte Strom fliesst über das zweite Stromrichterbauteil in Richtung des ursprünglichen Stromflusses durch die Erregerwicklung und durch den in Reihe zur Erregerwicklung, geschalteten Lastwiderstand $R_{\parallel}$ zurück zur Ankerwicklung. Somit hilft die erfindungsgemäße Ansteuerschaltung das Erregermagnetfeld aufrecht zu erhalten, selbst wenn der Motor in den Generatorbetrieb übergegangen ist.

Die Stromrichterbauteile haben die Aufgabe, Strom nur in einer Richtung durchzulassen. Vorteilhafterweise verwendet man für zumindest ein Stromrichterbauteil, meist jedoch für alle Stromrichterbauteile Leistungsdioden, die in Durchlassrichtung den Strom der Ankerwicklung bzw. Erregerwicklung aufnehmen können und in Sperrrichtung die auftretende Sperrspannung durchschlagsicher aushalten.

Jedoch ist es vorteilhafter Weise auch möglich, dass zumindest ein Stromrichterbauteil ein aktives Schaltelement, insbesondere ein Thyristor, Transistor, Schütz oder ähnliches ist, das in Abhängigkeit des Betriebsverhaltens des Motors geschaltet wird. Diese Ausführung erfordert in der Regel, dass zumindest bei unipolaren Bauteilen eine Steuerung, die den Betriebsfall des Reihenschlussmotors feststellt und in Abhängigkeit der festgestellten Betriebsart das Stromrichterbauteil schaltet, vorgesehen ist.

Wird statt einer Leistungsdiode als Stromrichterbauteil ein unipolares Schaltelement, beispielsweise ein Schütz oder ein Transistor verwendet, so ist es vorteilhaft möglich, dass die Ansteuerschaltung des Weiteren eine Ankerstrommessvorrichtung zur Beurteilung des Betriebsverhaltens des Motors umfasst, die der Steuerung des Stromrichterbauteils dient. Mittels einer Ankerstrommessvorrichtung wird somit die Richtung des Stromflusses im Anker gemessen, und dadurch kann beurteilt werden, ob ein motorischer oder generatorischer Betrieb vorliegt. Nach Feststellung des Betriebsfalls können die Stromrichterbauteile entsprechend geschaltet werden.

Des Weiteren ist es im Falle von unipolaren Stromrichterbauteilen vorteilhaft, wenn die Ankerstrommessvorrichtung mit einem Betriebsartsteuergerät verbunden ist, das eine motorische oder generatorische Betriebsart in Abhängigkeit der Messdaten der Ankerstrommessvorrichtung feststellt, und die in Abhängigkeit der Betriebsart das erste und zweite Stromrichterbauteil schaltet. Solch ein Betriebsartsteuergerät kann beispielsweise ein Mikrocontroller, ein Betriebsrechner oder ähnliches sein, und neben der Steuerung der Stromrichterbauteile andere motorrelevanten Steueraufgaben, wie beispielsweise Steuerung der Nennspannung der Spannungsquelle oder ähnliches vornehmen.

Die Stromrichterbauteile bestehen, wie oben bereits dargestellt, aus einem Bauteil zur Sicherstellung einer gewünschten Stromrichtung, beispielsweise aus Dioden oder aktiven Schaltelementen. In einem ausgezeichneten Ausführungsbeispiel ist es höchst vorteilhaft, wenn zumindest ein Stromrichterbauteil des weiteren ein Überstrom- bzw. Überspannungsschutzbauteil und/oder ein Strom- bzw. Spannungsmessbauteil umfasst. Ein Überstrom- bzw. Überspannungsschutzbauteil überwacht den Stromfluss durch bzw. die Spannung über dem Pfad des Stromrichterbauteils und kann bei zu hohen Strömen bzw. Spannungen (auch Sperrspannungen) den Pfad abtrennen, d.h. dass Stromrichterbauteil schützen. Daneben kann ein Strom- bzw. Spannungsmessbauteil die Ströme und Spannungen im Pfad des Stromrichterbauteils messen und einen Aufschluss über den Betriebszustand der Windkraftanlage geben und im Notfall, z.B. bei Überschreitung eines kritischen Wertes, eine Notabschaltung auslösen. Es liegt dabei auf der Hand, dass Strom- bzw. Spannungsschutzelement und -messelement kombiniert sein können. Als Spannungsquelle kommt insbesondere im Notbetrieb ein Akkumulator, eine Batterie oder ähnliches in Frage. Zur Erhöhung der Lebensdauer einer solchen Gleichspannungsquelle ist es des Weiteren vorteilhaft möglich, ein weiteres Stromrichterbauteil der Spannungsquelle vorzuschalten, so dass es in Reihe zur Spannungsquelle liegt. Das weitere Stromrichterbauteil verhindert, dass im generatorischen Betrieb Strom in die Spannungsquelle zurückfließt. Mittels eines solchen weiteren Stromrichterbauteils wird die Spannungsquelle wirkungsvoll vor unerwünschten Aufladeströmen durch den Generatorbetrieb des Reihensschlussmotors geschützt.

Sind Erreger- und Ankerwicklung in Reihe geschaltet, so ist prinzipiell auch bei Kommutierung der Spannungsquelle nur ein Betrieb des Reihenschlussmotors in einer Drehrichtung möglich. Die erfindungsgemäße Ansteuerschaltung kann deshalb vorteilhafter Weise durch einen Feldgleichrichter ergänzt werden, der die Erregerwicklung mittels einer Brückengleichrichterschaltung verschaltet, so dass der Erregerstrom unabhängig von der Polarität der Spannungsquelle immer in die gleiche Richtung fließt. Somit ist ein Rechts-/Linkslauf des Motors durch Umpolung der Spannungsquelle möglich.

Das Anwendungsgebiet der erfindungsgemäßen Windkraftanlage mit Ansteuerschaltung liegt im Betrieb eines Pitchmotors, der das Blatt einer Wind- oder auch Wasserkraftanlage bewegt, so dass mittels des Reihenschlussmotors der Anstellwinkel des Rotorblatts gegenüber dem strömenden Medium (Wind oder Wasser) verändert werden kann. In diesem Zusammenhang hat die Betriebssicherheit des Pitchreglersystems höchste Priorität, da die Steuerung des Anstellwinkels des Rotorblatts wesentlich den Betrieb der Kraftanlage beeinflusst. In vorteilhafter Weise wird die Ansteuerschaltung in einem Normalbetrieb der drehrichtungsumschaltbar ist, mit einer Normalbetriebsspannungsquelle so verschaltet, dass der Brückengleichrichter zwischen Normalbetriebsspannungsquelle und Erregerwicklung geschaltet ist, und in einem drehrichtungsfestgelegten Notbetrieb so geschaltet, dass die Dioden des Brückengleichrichters als erstes und zweites Stromrichterbauteil eine Notbetriebsspannungsquelle mit der Erregerwicklung, der Ankerwicklung und dem Lastwiderstand $R_{\parallel}$ verbindet. Somit realisiert diese Windkraftanlage eine Ansteuerschaltung mit Feldgleichrichter nach dem Stand der Technik im Normalbetrieb, d.h. bei Betrieb mit einer Normalbetriebsspannungsquelle, und im Notbetrieb werden durch umgekehrte Speisung des Feldgleichrichters an den Anschlusspolen der Erregerwicklung die Dioden des Brückengleichrichters dazu herangezogen, die Funktion der Stromrichterbauteile einzunehmen. Somit verhält sich die Ansteuerschaltrichtung im Normalbetrieb wie die Ansteuerschaltung aus dem Stand der Technik und im Notbetrieb wie die erfindungsgemäße Ansteuerschaltung. Dies hat den Vorteil, dass ausgehend von einer aus dem Stand der Technik bekannten Ansteuerschaltung mit Feldgleichrichter durch Modifikation der Speisepunkte der Notbetriebsspannungsquelle eine erfindungsgemäße Ansteuerschaltung ohne zusätzliche Bauteile realisiert wird.

Wird die Windkraftanlage mit Ansteuerschaltung für einen Pitchantrieb mit zwei verschiedenen Spannungsquellen, der Notbetriebsspannungsquelle und der Normalbetriebsspannungsquelle ausgerüstet, so ist es besonders vorteilhaft, dass mindestens ein Schaltelement vorgesehen ist, das zwischen drehrichtungsumschaltbarem Normalbetrieb mit einer Normalbetriebsspannungsquelle und drehrichtungsvorgegebenem Notbetrieb mit einer Notbetriebsspannungsquelle umschaltet, wobei das erste bzw. zweite Stromrichterbauteil zumindest im Notbetrieb die Erregerwicklung im motorischen bzw. im generatorischen Betrieb richtungskonstant mit Strom versorgt. Hierdurch ist es einfach möglich, den Normalbetriebszustand vollkommen vom Notbetriebszustand der Ansteuerschaltung zu trennen, so dass die beiden verschiedenen Betriebsarten unabhängig voneinander realisiert werden können.

Wird wie oben angesprochen mindestens ein Schaltelement zum Umschalten zwischen Normalbetrieb und Notbetrieb verwendet, so ist es vorteilhaft, dass der Lastwiderstand durch ein Schaltelement zumindest im Notbetrieb in Reihe zur Erregerwicklung und parallel zur Ankerwicklung zugeschaltet wird. Somit kann im Normalbetrieb Strom eingespart und hohe Anlaufdrehmomente erreicht werden, und die Regelung des Reihenschlussmotors mit Hilfe der Normalbetriebsspannungsquelle gesteuert werden, während im Notbetrieb der parallele Lastwiderstand zugeschaltet wird, um ein Durchgehen des Motors im generatorischen Fall zu verhindern.

Im Folgenden wird die Erfindung anhand lediglich Ausführungsbeispiele zeigender Zeichnungen näher erläutert.

Es zeigen:

Fig. 1    eine Ansteuerschaltung für einen Pitchantrieb nach dem Stand der Technik mit Feldgleichrichter;

Fig. 2    eine Grundschaltung einer Ansteuerschaltung eines Pitchantrieb-Reihenschlussmotors nach dem Stand der Tech- nik;

Fig. 3    ein Diagramm der Drehzahlabhängigkeit vom Drehmoment bei einer Ansteuerschaltung nach dem Stand der Technik;

Fig. 4    ein erstes Ausführungsbeispiel einer erfindungsgemäßen Ansteuerschaltung;

Fig. 5    ein zweites Ausführungsbeispiel einer erfindungsgemäßen Ansteuerschaltung mit Feldgleichrichter;

Fig. 6    ein drittes Ausführungsbeispiel einer erfindungsgemäßen Ansteuerschaltung;

Fig. 7    ein viertes Ausführungsbeispiel einer erfindungsgemäßen Ansteuerschaltung.

**Fig. 1** zeigt eine herkömmliche Ansteuerschaltung für einen Pitchantrieb-Reihenschlussmotor einer Windkraftanlage, die einen Feldgleichrichter umfasst. Dabei erfolgt die Versorgung des Reihenschlussmotors entweder durch eine Netzspannungsquelle in Form eines Dreiphasensteuergeräts oder durch eine Notbetriebsspannungsquelle. Das Dreiphasensteuergerät nimmt die drei Netzphasen des Drehstromnetzes auf und wandelt diese in eine Gleichspannung zum Betrieb des Reihenschlussmotors um. Sie dient dabei als Normalbetriebsspannungsquelle, die aktiviert ist, wenn der Schütz K2 geschlossen ist. In diesem Fall bleibt der Schütz K1 geöffnet, und somit die Notbetriebsspannungsquelle, die beispielsweise eine Batterie oder ein Akkumulator sein kann, von der Ansteuerschaltung getrennt. Im Störungsfall, beispielsweise bei Ausfall einer oder mehrerer Netzphasen öffnet der Schütz K2 und trennt die Ansteuerschaltung von der Normalbetriebsspannungsquelle ab, und der Schütz K1 schließt, und versorgt somit die Ansteuerschaltung mit Energie über die Notbetriebsspannungsquelle. Die Notbetriebsspannungsquelle umfasst dabei eine Gleichspannungsquelle U= und einen Innenwiderstand $R_i$. Die Spannungsquelle liefert ihre Spannung an die Erregerwicklung, die in Reihe mit dem Ankerkreis verschaltet ist. Parallel zum Ankerkreis ist ein Lastwiderstand $R_\parallel$ geschaltet. Dabei ist die Erregerwicklung, die sich als Ersatzschaltbild durch Reihenschaltung eines ohmschen Lastwiderstandes $R_e$ und einer Induktivität $L_e$ darstellen lässt, mit einem als Brückengleichrichter verschalteten Feldgleichrichter verschaltet. Dieser bewirkt, dass unabhängig von der Polarität der Spannungsquelle die Erregerwicklung immer in gleicher Richtung mit Strom durchflossen wird, und somit das Erregermagnetfeld immer gleich ausgerichtet ist. Nachdem der Strom durch die Erregerwicklung geflossen ist, teilt er sich auf in einen Laststrom durch den Lastwiderstand $R_\parallel$ und in einen Ankerstrom durch die Ankerwicklung, die wiederum als Ersatzschaltbild durch Reihenschaltung einer Induktivität $L_a$ und eines ohmschen Widerstands $R_a$ dargestellt wird.

**Fig. 2** zeigt einen Betriebszustand der in **Fig. 1** gezeigten Ansteuerschaltung des Stands der Technik. **Fig. 2** entspricht dabei dem Notbetrieb der in **Fig. 1** dargestellten Schaltung, d.h. einem Betrieb mit geschlossenem Schütz K1 und geöffnetem Schütz K2. Dabei ist die Notbetriebsspannungsquelle, die aus Gleichspannungsquelle U= und Innenwiderstand $R_i$ besteht, in Reihe mit der Erregerwicklung, die eine Induktivität $L_e$ und einen Innenwiderstand $R_e$ umfasst, geschaltet, hiernach schließt sich die Parallelschaltung aus Lastwiderstand $R_\parallel$ und Ankerkreis, umfassend den ohmschen Widerstand $R_a$ und die Induktivität $L_a$, an. Der von der Spannungsquelle gelieferte Strom durchströmt die Erregerwicklung und erzeugt ein Erregermagnetfeld, und teilt sich dann in einen Strom durch den Lastwiderstand $R_\parallel$ und in einen Ankerstrom durch den Ankerkreis auf. Im Leerlauf nimmt der Strom durch den Ankerkreis ab, so dass das Erregermagnetfeld hauptsächlich durch den Strom des Lastwiderstandes $R_\parallel$ erzeugt wird.

**Fig. 3** zeigt das Verhalten der Drehzahl des Reihenschlussmotors bei Verwendung der nach dem Stand der Technik in **Fig. 2** gezeigten Ansteuerschaltung einer Windkraftanlage bei abnehmendem Lastmoment. Bei einem hohen Lastmoment, beispielsweise bei 90 Nm beträgt die Drehzahl ca. 400 Umdrehungen pro Minute. Nimmt das Lastmoment ab, so nimmt die Drehzahl quasi exponentiell zu, und bei verschwindendem Lastmoment d.h. in einem idealen Leerlauf steigt die Drehzahl über alle Grenzen, was letztlich zu einer Zerstörung des Motors führt. Diese Situation wird im Stand der Technik dadurch gemildert, dass der parallel zum Ankerkreis geschaltete Lastwiderstand $R_\parallel$ einen Grundstrom durch die Erregerwicklung selbst bei stromlosem Ankerkreis ermöglicht, und somit den Motor zumindest bei geringen Lastmomenten drehzahlbegrenzt betreibt. Jedoch kann auch der parallel geschaltete Lastwiderstand $R_\parallel$ nicht verhindern, dass bei einem generatorischen Betrieb des Reihenschlussmotors d.h. einem Antrieb der Motorwelle von außen und einer damit von außen erzwungenen Erhöhung der Drehzahl, das eingangs beschriebene Phänomen des "Durchgehens" des Motors auftritt.

**Fig. 4** zeigt ein erstes Ausführungsbeispiel einer erfindungsgemäßen Windkraftanlage mit Ansteuerschaltung für einen Pitchantrieb-Reihenschlussmotor. In der in **Fig. 4** gezeigten Grundschaltung wird der Reihenschlussmotor durch eine Notbetriebsspannungsquelle, die eine Gleichspannungsquelle U= und ein Innenwiderstand $R_i$ umfasst, mit Energie versorgt. Im motorischen Betrieb, d.h. im Normalbetrieb fließt der Strom durch die Erregerwicklung zunächst von der Spannungsquelle durch einen zweiten Anschlusskontakt E2 in die Erregerwicklung und tritt an einem ersten Anschlusskontakt E1 aus. Danach teilt sich der Erregerstrom in einen durch einen parallel zum Ankerkreis geschalteten Lastwiderstand $R_\parallel$ auf, und fließt durch den ersten Anschlusskontakt R1 des Lastwiderstands in den Lastwiderstand und tritt am zweiten Anschlusskontakt R2 aus. Ein zweiter Teil des Erregerstroms fließt vom ersten Anschlusskontakt der Erregerwicklung E1 über ein Stromrichterbauteil S1 zum ersten Anschlusskontakt der Ankerwicklung. Dort tritt sie in den Ankerkreis, der einen Innenwiderstand $R_a$ und eine Induktivität $L_a$ umfasst, ein und tritt am zweiten Anschlusskontakt der Ankerwicklung A2 aus. An dieser Stelle vereinigt sich der Ankerstrom mit dem vom parallel geschalteten Lastwiderstand $R_\parallel$ kommenden Strom und fließt zurück zur Spannungsquelle. Somit ist im motorischen Betrieb das erste Stromrichterbauteil S 1 in Durchlassrichtung geschaltet. Des Weiteren ist ein zweites Stromrichterbauteil S2 vom ersten Anschlusskontakt A1 des Ankerkreises zum zweiten Anschlusskontakt E2 der Erregerwicklung und damit unmittelbar zum Anschlusskontakt der Spannungsquelle geschaltet. Im motorischen Betrieb ist dieses zweite Stromrichterbauteil in Sperrrichtung geschaltet.

Während des motorischen Betriebs fließt somit der Strom durch die Erregerwicklung zum Anker und teilt sich dort, wie bei der aus dem Stand der Technik bekannten Ansteuerschaltung, in einen Widerstandsstrom sowie einem momentbildenden Ankerstrom. Am Parallelwiderstand $R_\parallel$ liegt, da die Erregerwicklung in der Regel niederohmig ist, im Wesentlichen die Klemmspannung der Batterie an. Sie wird lediglich um den Spannungsabfall am Reihenschlusswiderstand der Erregerwicklung reduziert. Bei größer werdenden Momenten nimmt der Strom durch die Reihenschlusswicklung zu. Dadurch nimmt ebenfalls der Spannungsabfall an der Reihenschlusswicklung zu, so dass bei größeren Momenten die Spannung am Parallelwiderstand $R_\parallel$ im Verhältnis zur Batteriespannung abnimmt. Diese Abnahme wird durch den Innenwiderstand $R_i$ der Spannungsquelle noch weiter verstärkt. Somit verringert sich der Strom durch den Parallelwiderstand $R_\parallel$ bei größer werdenden Momenten. Nähert sich nun die Maschine dem Leerlauflauf, so nimmt der Batteriestrom immer weiter ab, wodurch sich ebenfalls die Erregung der Maschine verringert. Im idealen Leerfall ist der Ankerstrom Null und die Erregung der Maschine wird nur noch durch den Strom des Parallelwiderstands bestimmt. Bis zum Leerlauf entspricht das Verhalten der Ansteuerschaltung dem Verhalten der aus dem Stand der Technik bekannten Ansteuerschaltung.

Wird nun die Drehzahl der Maschine weiter erhöht, z.B. wenn der Reihenschlussmotor als Pitchmotor zur Verstellung des Rotorblattpitches dient, und das Blatt in eine senkrechte Stellung drängt, so führt dies zu einer weiteren Erhöhung der induzierten Spannung im Ankerkreis bei zunächst konstanter Erregung des Erregerkreises. Der Strom im Anker ändert daraufhin seine Richtung, wodurch das Stromrichterbauteil S2 leitend wird und das Stromrichterbauteil S1 in den Sperrzustand übergeht. Der im Anker generierte Strom teilt sich auf in einen Pfad durch die Spannungsquelle und einen Pfad durch die Erregerwicklung und den parallelen Lastwiderstand $R_\parallel$, und fließt zurück zum Ankerkreis. Das Potential am Parallelwiderstand ist durch den Abfall an der Reihenschlusswicklung zunächst geringer als das Potential der Spannungsquelle, somit nimmt der generatorische Ankerstrom zunächst den Weg über den Lastwiderstand $R_\parallel$. Dabei bleibt der Strom im Parallelwiderstand nahezu konstant, was zu einer Abnahme des Batteriestroms führt. In dieser Situation wechselt die Versorgung des Parallelwiderstands, wie ebenfalls in der aus dem Stand der Technik bekannten Ansteuerschaltung, von der Batterie zum Anker. Im Gegensatz zu den aus dem Stand der Technik bekannten Ansteuerschaltungen führt dies jedoch nicht zu einer Abnahme der Erregung. Die Erregung bleibt, da der Widerstandsstrom konstant bleibt, nahezu konstant. Bei einer genügend hohen generatorischen Last übernimmt der Ankerstrom vollständig die Versorgung des Parallelwiderstands $R_\parallel$ und der Batteriestrom wird zu Null. Sobald ein negativer Ankerstrom auftritt, befindet sich die Maschine im generatorischen Zustand. Die entstandene generatorische Leistung wird in diesem Zeitraum vom Parallelwiderstand $R_\parallel$ aufgenommen, und es kommt nicht zur Ladung der Spannungsquelle, d.h. der Batterie oder des Akkumulators. Erst wenn das generatorische Moment weiter erhöht wird, kommt es zu einem Stromfluss in der Batterie. Der Strom im Widerstand bleibt dabei quasi konstant. Als Folge ist die Maschine in der Lage, generatorische Momente abzufangen, ohne in Überdrehzahl zu geraten. Dabei können generatorische Stromspitzen quasi verhindert werden. Wird in der Ansteuerschaltung, insbesondere beim Betrieb in einem Pitchsystem, Akkumulatoren eingesetzt, so werden diese geschont. Ausgehend von der aus dem Stand der Technik bekannten Ansteuerschaltungen sind lediglich zwei weitere Stromrichterbauteile, insbesondere Dioden, zusätzlich notwendig, um eine Ausführungsform der Erfindung zu realisieren.

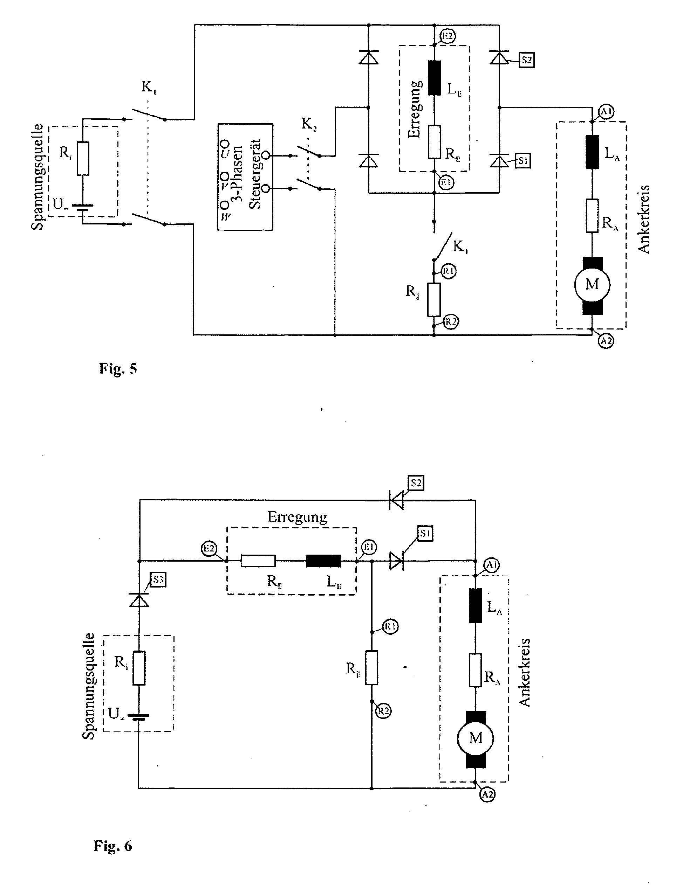

Um die oben beschriebene Schaltungsvariante der **Fig. 4** vorteilhaft in einem Pitchsystem einer Windoder Wasserkraftanlage zu integrieren, kann eine Realisierung wie die in **Fig. 5** dargestellte Ausführung vorgenommen werden. In **Fig. 5** ist eine typische Ansteuerschaltung, die aus dem Stand der Technik nach **Fig. 1** geschaltet wurde, so modifiziert, dass damit der erfinderische Gedanke verwirklicht wurde. Die Ansteuerschaltung nach **Fig. 5** wird im Normalbetrieb durch eine Normalbetriebsspannungsquelle, in diesem Fall durch ein Dreiphasensteuergerät betrieben. Hierzu ist der Schütz K2 geschlossen und der Schütz K1 geöffnet. Im Normalbetrieb versorgt das Dreiphasensteuergerät die Ansteuerschaltung mit Strom, wobei der Strom in der Erregerwicklung durch einen Feldgleichrichter, der unter anderem die Dioden S1, S2 umfasst, die Erregerwicklung polunabhängig so versorgt, dass selbst bei Kommutierung der Spannungsquelle das magnetische Erregerfeld richtungskonstant ausgerichtet bleibt. Nachdem der Strom durch die Erregerwicklung und den Feldgleichrichter geflossen ist, fließt er durch den Ankerkreis zurück zum Dreiphasensteuergerät. Im Störfall, d.h. im Notbetrieb, wird der Schütz K2 geöffnet und der Schütz K1 geschlossen. Damit wird eine Notbetriebsspannungsquelle, beispielsweise eine Gleichspannungsquelle wie Akkumulator oder Batterie, zugeschaltet. Des Weiteren wird in Reihe zur Erregerwicklung und parallel zum Ankerkreis der Lastwiderstand $R_\parallel$ zugeschaltet. Dabei fließt der Strom der Notbetriebsspannungsquelle im Gegensatz zum Betrieb mit Normalbetriebsspannungsquelle in die Gleichspannungsseite des Feldgleichrichters, und versorgt somit direkt die Erregerwicklung und den damit in Reihe geschalteten Lastwiderstand $R_\parallel$ mit Strom. Die Spannungsquelle ist des Weiteren über die Diode S2 und über die Erregerwicklung und die Diode S1 mit dem Ankerkreis gekoppelt. Die beiden verbleibenden Dioden des Brückengleichrichters sind in diesem Fall funktionslos, da sie in Bezug auf die Polarität der Notbetriebsspannungsquelle in Sperrrichtung geschaltet sind.

Somit wird, ausgehend von der in **Fig. 1** dargestellten Ansteuerschaltung, durch eine lediglich gering veränderte Ansteuerung des Feldgleichrichters durch die an der Gleichspannungsseite angeschlossene Notbetriebsspannungsquelle eine erfindungsgemäße Ansteuerschaltung realisiert, ohne dass zusätzliche Bauteile benötigt werden. Grundsätzlich bietet diese Realisierung die Möglichkeit, die Maschine in den generatorischen Betriebszustand zu versetzen, und dabei eine Selbstzerstörung der Maschine zu verhindern.

Durch die Wahl der Größe des Lastwiderstandes kann die Drehmomentdrehzahl und die Charakteristik der Reihenschlussmaschine beliebig beeinflusst werden. Zu beachten ist jedoch die dabei auftretende relativ hohe Verlustleistung am Lastwiderstand $R_{\parallel}$. Der Betriebsbereich, in dem die aufkommende Leistung durch den Lastwiderstand $R_{\parallel}$ aufgenommen wird, führt zu einer aktiven Schonung der Akkumulatoren, da hohe Ladeströme verhindert werden. Die Größe dieses Betriebsbereichs kann ebenfalls durch die Dimensionierung des Lastwiderstands festgelegt werden. Im verbleibenden generatorischen Bereich werden die hohen Ladeströme des Akkus jeweils durch den Strom des Parallelwiderstands reduziert. In industriell üblichen 216 V Systemen kann die Schaltungsvariante ohne zusätzlichen Hardware-Aufwand umgesetzt werden. Im Vergleich zu alternativen Doppelschlusssystemen weist das System eine höhere Zuverlässigkeit auf, da eine geringe Anzahl von Schützen verwendet werden muss, und der Gefahr eines Drahtbruchs in einer Nebenschlusswicklung, der üblicherweise bei Nebenschlussmaschinen zur Überdrehzahl führt, entfällt. Des Weiteren treten bei der erfindungsgemäßen Anschlussschaltung keine komplexen Effekte auf, wie bei einer Doppelschlussmaschine. Schließlich zeichnet sich eine erfindungsgemäße Anschlussschaltung durch einen sehr geringen Kosten- und Realisierungsaufwand aus.

In **Fig. 6** ist einer Modifikation des in **Fig. 4** dargestellten Ausführungsbeispiels gezeigt: Zusätzlich zu den beiden Gleichrichterbauteilen S1 und S2, die als Dioden ausgeführt sind, ist zum Schutz der Notbetriebsspannungsquelle eine dritte Diode S3 eingebaut. Diese schützt die Spannungsquelle vor generatorischen Strömen, die beispielsweise bei Batterien zur Zerstörung der Spannungsquelle führen können. Die Diode S3 ist in Reihe zur Notbetriebsspannungsquelle geschaltet und lässt lediglich einen aktivischen Stromfluss der Spannungsquelle zu.

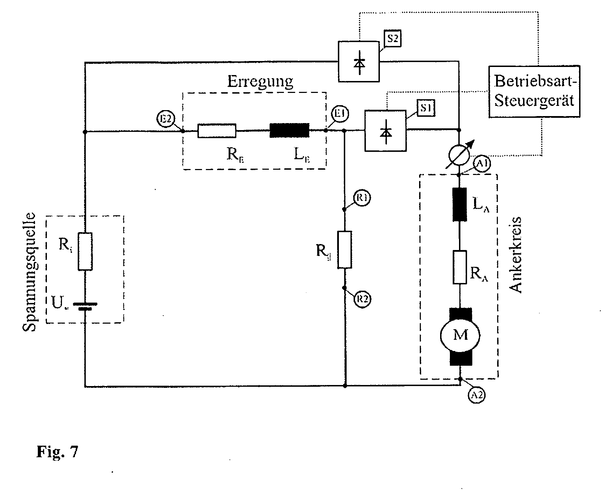

In **Fig. 7** ist schließlich ein viertes Ausführungsbeispiel einer erfindungsgemäßen Ansteuerschaltung dargestellt. Dieses erweitert, ausgehend von dem in **Fig. 4** dargestellten Ausführungsbeispiel, das erfinderische Konzepte insoweit, dass die beiden Stromrichterbauteile S1 und S2 statt durch Dioden durch aktive Schaltelemente, beispielsweise Transistoren, Thyristor, Schütze oder ähnliches realisiert worden sind. Dabei können die Stromrichterbauteile neben den aktiven Schaltelementen noch Strom- oder Spannungsüberwachungseinrichtungen und/oder Schutzeinrichtungen wie Messinstrumente, Sicherungen etc. enthalten. Die Steuerung der aktiven Schaltelemente wird durch ein Betriebsartsteuergerät vorgenommen. Hierzu ist im Ankerkreis ein Strommessgerät angeordnet, das den Ankerstrom, der zu bzw. vom ersten Anschlusskontakt A1 des Ankerkreises fließt, misst. Mit Hilfe des durch das Strommessgerät gemessenen Ankerstroms kann das Betriebsartsteuergerät den Betriebszustand des Reihenschlussmotors feststellen, z.B. bei positivem Strom motorischer Betrieb und bei negativem Strom generatorischer Betrieb, und in Abhängigkeit des Betriebszustandes die beiden Stromrichterbauteile S1, S2 dementsprechend schalten. Im Normalbetrieb (motorischer Betrieb) ist das Stromrichterbauteil S 1 durchgeschaltet und das Stromrichterbauteil S2 (generatorischer Betrieb) gesperrt. Somit fließt Strom von der Spannungsquelle über die Erregerwicklung durch den Lastwiderstand $R_{\parallel}$ und über das Stromrichterbauteil S1 durch den Ankerkreis. Fließt generatorischer Strom im Ankerkreis, so wird das Stromrichterbauteil S1 geöffnet und das Stromrichterbauteil S2 geschlossen, so dass der induzierte Strom des Ankerkreises über die Erregerwicklung und den Lastwiderstand zurück zum Ankerkreis fließen kann, um das Erregermagnetfeld aufrecht zu erhalten. Durch eine solche Realisierung ist eine Umsetzung des erfinderischen Konzepts selbst auf Motoren möglich, bei denen aufgrund der Anschlussströme und -spannungen herkömmliche Dioden nicht eingesetzt werden können.

## Patentansprüche

**1.** Windkraftanlage mit Ansteuerschaltung für einen drehzahlbegrenzten und spannungsquellenschonenden Betrieb eines Pitchantrieb-Reihenschlussmotors bei generatorischen Momenten, umfassend einen Reihenschlussmotor, bei dem Ankerwicklung und Erregerwicklung getrennt voneinander anschließbar sind, einen Lastwiderstand $R_{\parallel}$, der im wesentlichen in Reihe mit der Erregerwicklung und parallel zur Ankerwicklung geschaltet ist, so dass er im motorischen Betrieb für einen Mindesterregerstrom sorgt, wobei der Lastwiderstand $R_{\parallel}$ mit einem ersten Anschlusskontakt (R1) mit einem ersten Anschlusskontakt (E1) der Erregerwicklung und mit einem zweiten Anschlusskontakt (R2) mit einem zweiten Anschlusskontakt (A2) der Ankerwicklung verbunden ist, und eine Spannungsquelle, insbesondere Batterie oder Akkumulator,
**gekennzeichnet dadurch,**
**dass** der erste Anschlusskontakt (A1) der Ankerwicklung über ein erstes Stromrichterbauteil (S1) mit dem ersten Anschlusskontakt (E1) der Erregerwicklung und mit dem ersten Anschlusskontakt (R1) des Lastwiderstands $R_{\parallel}$ verbunden ist, und dass der erste Anschlusskontakt (A1) der Ankerwicklung des weiteren über ein zweites Stromrichterbauteil (S2) mit dem zweiten Anschlusskontakt (E2) der Erregerwicklung verbunden ist, wobei das erste Stromrichterbauteil (S1) so verschaltet ist, dass es im motorischen Betrieb durchschaltet und im generatorischen Betrieb sperrt, und das zweite Stromrichterbauteil (S2) so verschaltet ist, dass es im generatorischen Betrieb durchschaltet und im motorischen Betrieb sperrt, und dass die Spannungsquelle zwischen dem zweiten Anschlusskontakt (E2) der Erregerwicklung und einem zweiten Anschlusskontakt (A2) der Ankerwicklung geschaltet ist.

2. Windkraftanlage nach Anspruch 1,
   **dadurch gekennzeichnet,**
   **dass** zumindest ein Stromrichterbauteil (S1, S2) eine Leistungsdiode ist.

3. Windkraftanlage nach einem der vorangegangenen Ansprüche,
   **dadurch gekennzeichnet,**
   **dass** zumindest ein Stromrichterbauteil (S1, S2) ein aktives Schaltelement, insbesondere Transistor, Thyristor, Schütz oder ähnliches, ist, dass in Abhängigkeit des Betriebsverhalten des Motors (motorisch oder generatorisch) geschaltet wird.

4. Windkraftanlage nach Anspruch 3
   **dadurch gekennzeichnet,**
   **dass** die Ansteuerschaltung des weiteren eine Ankerstrommessvorrichtung zur Beurteilung des Betriebsverhaltens des Motors umfasst, die zur Steuerung des Stromrichterbauteils (S1, S2) dient.

5. Windkraftanlage nach Anspruch 3 oder 4
   **dadurch gekennzeichnet,**
   **dass** die Ankerstrommmessvorrichtung mit einem BetriebsartSteuergerät verbunden ist, die eine motorische oder generatorische Betriebsart in Abhängigkeit der Messdaten der Ankerstrommmessvorrichtung feststellt, und die in Abhängigkeit der Betriebsart das erste und zweite Stromrichterbauteil (S1, S2) schaltet.

6. Windkraftanlage nach einem der vorangegangenen Ansprüche
   **dadurch gekennzeichnet,**
   **dass** zumindest ein Stromrichterbauteil des weiteren ein Überstrom- bzw. Überspannungsschutzbauteil und/oder ein Strom- bzw. Spannungsmessbauteil umfasst.

7. Windkraftanlage nach einem der vorangegangenen Ansprüche
   **dadurch gekennzeichnet,**
   **dass** die Spannungsquelle ein weiteres Stromrichterbauteil (S3) umfasst, dass in Reihe zur Spannungsquelle geschaltet ist, und das verhindert, dass im generatorischen Betrieb Strom in die Spannungsquelle zurückfließt.

8. Windkraftanlage nach einem der vorangegangenen Ansprüche
   **dadurch gekennzeichnet,**

**dass** die Erregerwicklung mit einem als Feldgleichrichter dienenden Brückengleichrichter verschaltet ist.

9. Windkraftanlage nach Anspruch 8
   **dadurch gekennzeichnet,**
   **dass** der Brückengleichrichter in einem drehrichtungsumschaltbaren Normalbetrieb zwischen einer Normalbetriebsspannungsquelle und der Erregerwicklung geschaltet ist, und in einem drehrichtungsvorgegebenem Notbetrieb so geschaltet ist, dass dessen Dioden als erstes und zweites Stromrichterbauteil (S1, S2) eine Notbetriebsspannungsquelle und die Erregerwicklung mit der Ankerwicklung verbinden.

10. Windkraftanlage nach einem der vorangegangenen Ansprüche
    **dadurch gekennzeichnet,**
    **dass** mindestens ein Schaltelement (K1, K2) vorgesehen ist, dass zwischen drehrichtungsumschaltbarem Normalbetrieb mit einer Normalbetriebsspannungsquelle und drehrichtungsvorgegebenem Notbetrieb mit einer Notbetriebsspannungsquelle umschaltet, wobei das erste bzw. zweite Stromrichterbauteil (S1, S2) zumindest im Notbetrieb die Erregerwicklung im motorischen bzw. im generatorischen Betrieb mit Strom versorgt.

11. Windkraftanlage nach Anspruch 9
    **dadurch gekennzeichnet,**
    **dass** der Lastwiderstand $R_\parallel$ durch ein Schaltelement (K1) zumindest im Notbetrieb in Reihe zur Erregerwicklung und parallel zur Ankerwicklung zugeschaltet wird.

**Claims**

1. A wind turbine with drive circuit for speed-limited and voltage-source-conserving operation of a pitch mechanism series motor with generator moments, comprising a series motor in which the armature winding and the field winding can be connected separately from each other, a load resistance $R_{II}$, which is connected essentially in series with the field winding and in parallel with the armature winding so that it ensures a minimum field current during motor operation, wherein the load resistance $R_{II}$ is connected with a first connection contact (R1) to a first connection contact (E1) of the field winding and with a second connection contact (R2) to a second connection contact (A2) of the armature winding, and a voltage source, in particular a rechargeable or non-rechargeable battery,
   **characterised in that**
   the first connection contact (A1) of the armature winding is connected via a first converter component (S1) to the first connection contact (E1) of the field winding and to the first connection contact (R1) of the load resistance $R_{II}$, and that the first connection contact (A1) of the armature winding is furthermore connected via a second converter component (S2) to the second connection contact (E2) of the field winding, wherein the first converter component (S1) is wired in such a manner that it conducts during motor operation and blocks during generator operation, and the second converter component (S2) is wired in such a manner that it conducts during generator operation and blocks during motor operation, and that the voltage source is connected between the second connection contact (E2) of the field winding and a second connection contact (A2) of the armature winding.

2. The wind turbine according to Claim 1, **characterised in that** at least one converter component (S1, S2) is a power diode.

3. The wind turbine according to one of the preceding claims, **characterised in that** at least one converter component (S1, S2) is an active switching element, in particular a transistor, thyristor, contactor or similar which is switched as a function of the operating behaviour of the motor (motor or generator).

4. The wind turbine according to Claim 3, **characterised in that** the drive circuit furthermore comprises an armature current measurement device for evaluating the operating behaviour of the motor, which is used for controlling the converter component (S1, S2).

5. The wind turbine according to Claim 3 or 4, **characterised in that** the armature current measurement device is connected to an operating mode control unit which determines a motor or generator operating mode as a function of the measurement data of the armature current measurement device and switches the first and second converter components (S1, S2) as a function of the operating mode.

6. The wind turbine according to one of the preceding claims, **characterised in that** at least one converter component furthermore comprises an overcurrent or overvoltage protection component and/or a current or voltage measurement component.

7. The wind turbine according to one of the preceding claims,

**characterised in that** the voltage source comprises a further converter component (S3) which is connected in series with the voltage source and prevents current from flowing back into the voltage source during generator operation.

8. The wind turbine according to one of the preceding claims, **characterised in that** the field winding is wired with a bridge rectifier which acts as a field rectifier.

9. The wind turbine according to Claim 8, **characterised in that** the bridge rectifier is connected between a normal operation voltage source and the field winding during normal operation with a switchable direction of rotation, and is switched during emergency operation with a predefined direction of rotation in such a manner that its diodes connect an emergency operation voltage source and the field winding to the armature winding as the first and second converter components (S1, S2).

10. The wind turbine according to one of the preceding claims, **characterised in that** at least one switching element (K1, K2) is provided which switches between normal operation with a switchable direction of rotation and a normal operation voltage source and emergency operation with a predefined direction of rotation and an emergency operation voltage source, wherein the first or second converter component (S1, S2) respectively supplies the field winding with current during motor or generator operation respectively, at least during emergency operation.

11. The wind turbine according to Claim 9, **characterised in that** the load resistance $R_{II}$ is added in series with the field winding and in parallel with the armature winding by a switching element (K1), at least during emergency operation.

**Revendications**

1. Éolienne avec un circuit de commande pour le fonctionnement, limité en vitesse de rotation et économique pour la source de tension, d'un moteur à excitation en série à entraînement de pales avec des couples générateurs, comprenant un moteur à excitation en série, dans lequel l'enroulement induit et l'enroulement d'excitation peuvent être connectés séparément l'un de l'autre, une résistance de charge $R_{II}$, connectée essentiellement en série avec l'enroulement d'excitation et parallèlement à l'enroulement induit, de manière à assurer un courant d'excitation minimal lors du fonctionnement motorisé, la résistance de charge $R_{II}$ étant reliée avec un premier contact de raccordement (R1) avec un premier contact de raccordement (E1) de l'enroulement d'excitation et avec un deuxième contact de raccordement (R2) avec un deuxième contact de raccordement (A2) de l'enroulement induit, et une source de tension, en particulier une batterie ou un accumulateur, **caractérisée en ce que**
le premier contact de raccordement (A1) de l'enroulement induit est relié par une première pièce de convertisseur (S1) avec le premier contact de raccordement (E1) de l'enroulement d'excitation et avec le premier contact de raccordement (R1) de la résistance de charge $R_{II}$, et **en ce que** le premier contact de raccordement (A1) de l'enroulement induit est en outre relié avec le deuxième contact de raccordement (E2) de l'enroulement d'excitation par une deuxième pièce de convertisseur (S2), la première pièce de convertisseur (S1) étant raccordée de manière à se connecter lors du fonctionnement motorisé et à se verrouiller lors du fonctionnement par générateur, et la deuxième pièce de convertisseur (S2) est raccordée de manière à se connecter lors du fonctionnement par générateur et à se verrouiller lors du fonctionnement motorisé, et **en ce que** la source de tension est raccordée entre le deuxième contact de raccordement (E2) de l'enroulement d'excitation et un deuxième contact de raccordement (A2) de l'enroulement induit.

2. Éolienne selon la revendication 1,
   **caractérisée en ce que**
   au moins une pièce de convertisseur (S1, S2) est une diode de puissance.

3. Éolienne selon l'une des revendications précédentes,
   **caractérisée en ce que**
   au moins une pièce de convertisseur (S1, S2) est un élément de commutation actif, en particulier un transistor, un thyristor, un contacteur ou autre, commuté en fonction du comportement de fonctionnement du moteur (motorisé ou par générateur).

4. Éolienne selon la revendication 3,
   **caractérisée en ce que**
   le circuit de commande comprend en outre un dispositif de mesure du courant induit pour l'évaluation du comportement opérationnel du moteur, permettant de commander la pièce de convertisseur (S1, S2).

5. Éolienne selon la revendication 3 ou 4,
   **caractérisée en ce que**
   le dispositif de mesure du courant induit est relié avec un appareil de commande de mode de fonctionnement, constatant un mode de fonctionnement motorisé ou par générateur, en fonction des données de mesure du dispositif de mesure de courant induit, et activant la première et la deuxième pièce de commutateur (S1, S2) en fonction du mode de fonctionnement.

6. Éolienne selon l'une des revendications précédentes,
   **caractérisée en ce que**
   au moins une pièce de convertisseur comprend en outre un élément de protection contre la surintensité ou la surtension et/ou un élément de mesure du courant ou de tension.

7. Éolienne selon l'une des revendications précédentes,
   **caractérisée en ce que**
   la source de tension comprend une autre pièce de convertisseur (S3), connectée en série avec la source de tension et empêchant le retour du courant vers la source de courant lors du fonctionnement par générateur.

8. Éolienne selon l'une des revendications précédentes,
   **caractérisée en ce que**
   l'enroulement d'excitation est branché avec un redresseur en pont servant de redresseur de champ.

9. Éolienne selon la revendication 8,
   **caractérisée en ce que**
   dans un mode de fonctionnement normal à sens de rotation commutable, le redresseur en pont est connecté entre une source de tension de fonctionnement normal et l'enroulement d'excitation, et, dans un mode de fonctionnement d'urgence à sens de rotation prédéfini, est connecté de manière à ce que ses diodes, en tant que premier et deuxième éléments de convertisseur (S1, S2) relient une source de tension de fonctionnement d'urgence et l'enroulement d'excitation avec l'enroulement induit.

10. Éolienne selon l'une des revendications précédentes,
    **caractérisée en ce que**
    il est prévu au moins un élément de commutation (K1, K2), basculant entre le mode de fonctionnement normal à sens de rotation commutable, avec une source de tension de fonctionnement normal, et le mode de fonctionnement d'urgence à sens de rotation prédéfini, avec une source de tension de fonctionnement d'urgence, dans laquelle, au moins dans le mode de fonctionnement d'urgence, la première ou la deuxième pièce de convertisseur (S1, S2) alimente en courant l'enroulement d'excitation, lors du fonctionnement motorisé ou par générateur.

**11.** Éolienne selon la revendication 9,
**caractérisée en ce que**
la résistance de charge $R_{II}$ est connectée en série avec l'enroulement d'excitation et parallèlement à l'enroulement induit, au moins dans le mode de fonctionnement d'urgence, par un élément de commutation (K1).

Stand der Technik

Erregung

$L_E$

$R_E$

$K_2$

$K_1$

$K_1$

$K_1$

Spannungsquelle

$R_i$

$U_{=}$

3-Phasen Steuergerät

$L_1$

$L_2$

$L_3$

$R_{ä}$

$L_A$

$R_A$

M

Ankerkreis

**Fig. 1**

Erregung

$R_E$

$L_E$

Spannungsquelle

$R_i$

$U_{=}$

$R_{ä}$

$L_A$

$R_A$

M

Ankerkreis

Stand der Technik

**Fig. 2**

**Fig. 3**

**Fig. 4**

Fig. 5

Fig. 6

15

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004005169